Europäisches Patentamt

European Patent Office

Office européen des brevets

(19)

(11) Numéro de publication: **0 276 189 B1**

(12) # FASCICULE DE BREVET EUROPEEN

(45) Date de publication du fascicule du brevet:
12.09.90

(51) Int. Cl.⁵: **C02F 1/00, A61K 35/08, B01D 61/00**

(21) Numéro de dépôt: 88400130.6

(22) Date de dépôt: 21.01.88

(54) **Régénération d'eaux thermales.**

(30) Priorité: 21.01.87 FR 8700646

(43) Date de publication de la demande:
27.07.88 Bulletin 88/30

(45) Mention de la délivrance du brevet:
12.09.90 Bulletin 90/37

(84) Etats contractants désignés:
AT BE CH DE ES FR GB GR IT LI LU NL SE

(56) Documents cités:
EP-A- 0 128 233
DE-A- 2 032 863
DE-A- 2 615 222
DE-A- 2 725 010

(73) Titulaire: Lamothe, André, Plateau de Beauregard Les Pinchinats, F-13100 Aix en Provence(FR)

(72) Inventeur: Lamothe, André, Plateau de Beauregard Les Pinchinats, F-13100 Aix en Provence(FR)

(74) Mandataire: Boutin, Antoine et al, CABINET PIERRE LOYER 77, rue Boissière, F-75116 Paris(FR)

**Description**

La présente invention est relative aux eaux et boues thermales et plus particulièrement aux problèmes d'ordre sanitaire posés par leur utilisation dans des lieux publics.

Les eaux thermales ont des compositions chimiques et bactériologiques particulière. Chaque type d'eau thermale contient sous forme de sels dissous ou de gaz des anions et cations actifs et certaines eaux des agents vivants sous forme de microorganismes aérobies et anaérobies communément appelés "plancton thermal". Ces microorganismes sont plus particulièrement les bactéries du soufre, du fer et les cyanobactéries.

Les boues thermales sont la composante :
- d'une base solide constituée par un amalgame d'éléments divers (colloïdes, tourbes, silice...) constituant un "gite de boue thermale naturelle" ou tout simplement par des argiles naturelles extraites généralement hors du site,
- et de l'eau thermale avec ces agents actifs cations et anions spécifiques à chaque type d'eau et ces microorganismes propres.

Les propriétés curatives des eaux et des boues thermales sont connues depuis la plus haute antiquité et en particulier depuis la civilisation romaine.

Il est connu de faire subir à des patients des cures thermales au cours desquelles ils boivent de l'eau thermale, sont soumis à des douches ou bains dans de l'eau thermale ou reçoivent des applications de boues thermales.

Il est en particulier connu de faire prendre aux patients des bains dans des piscines remplies d'eau thermale. Mais dans ce cas l'eau de la piscine est inévitablement polluée par les baigneurs et se charge de germes dangereux tels que coliformes, streptocoques, staphylocoques, clostridium sulfitoréducteurs et autres. De telles eaux peuvent être traitée par un procédé décrit dans le brevet DE-A 2 615 222.

Lorsque les sources thermales ont un très gros débit, il est possible de réduire cette pollution par évacuation de l'eau de sorte que la piscine est pratiquement un bassin d'eau courante ; mais cela n'est pas toujours le cas de sorte que les volumes disponibles pour le renouvellement de l'eau ne sont pas suffisants pour assurer une évacuation satisfaisante des germes dangereux.

Il est alors indispensable d'avoir recours à des procédés de stérilisation des eaux de piscines qui ne peuvent être que physiques car ceux chimiques comme la chloration, l'ozonisation, transformeraient la composition chimique initiale de l'eau thermale et par leur effet de stérilisation durable détruiraient les éléments vivants réintroduits éventuellement en fin de cycle. Les procédés de stérilisation pouvant être utilisés sont la filtration, la chaleur, les rayons ultra-violets... On obtient alors une eau propre au point de vue sanitaire mais qui est une "eau morte" ayant pratiquement perdu toutes ses propriétés curatives d'eau thermale, notamment en raison de ce que le plancton thermal a été tué.

Le problème est le même en ce qui concerne les boues : au contact du corps du patient la boue se charge de bactéries plus ou moins infectieuses et de germes.

Lorsqu'on procède par des applications locales, les quantités de boues mises en oeuvre sont faibles et l'on peut, sans inconvénient majeur ne pas réutiliser la boue ayant servi à une application. Mais dans ce cas de traitement par immersion, c'est-à-dire, de ce qu'on appelle des bains de boue, les quantités de boues mises en oeuvre sont telles qu'on ne peut pas les remplacer après chaque usage. Il faut donc les recycler.

Il faut alors impérativement les débrasser de leurs germes et bactéries nocifs , c'est-à-dire en fait les stériliser et dans ce cas également on risque de détruire la plupart de leurs propriétés curatives.

La présente invention a pour objet un procédé consistant à régénérer des eaux et boues thermales stérilisées au moyen d'extrait d'eau thermale et elle vise également à titre de produit industriel nouveau l'extrait d'eau thermale permettant de réaliser une telle régénération.

Cet extrait est obtenu par concentration de l'eau thermale de façon à éliminer une grande quantité d'eau (en fait la plus grande quantité possible) et en ne conservant que les éléments vivants constituant le plancton thermal. Cette élimination de l'eau est obtenue par tout moyen connu tel que : centrifugation, microfiltration, osmose inverse.

A titre d'exemple, il est possible par centrifugation d'obtenir à partir de 2m3 d'eau, 1/4 de litre d'extrait.

Le procédé le plus complet expérimenté est celui de la centrifugation car il permet de concentrer la presque totalité des grosses molécules et en plus de capter les gaz dissous dans l'eau. Ces gaz sont recueillis pour être réinsufflés en fin de cycle de stérilisation dans l'eau ou la boue thermale ou servir à nourir l'extrait obtenu pour en assurer sa maturation (on appelle maturation un développement des germes bactériens qui se trouvent à l'état naturel dans l'eau thermale, chacun des ces germes ayant sa nourriture de croissance spécifique).

Une fois cet extrait obtenu et les gaz dissous récupérés, on peut régénérer en cycle continu l'eau et la boue de bains collectifs ou individuels, c'est-à-dire stériliser l'eau et la boue puis les réactiver et réintroduire après la stérilisation les éléments actifs vivants contenus dans le concentré ainsi que les gaz.

En ce qui concerne les eaux thermales, on procède de la façon suivante :
- dans un premier temps, on les filtre avec des filtres usuels de piscines tels que filtre à sable, filtre à diatomées ou autres pour retenir les grosses impuretés.
- puis l'eau est stérilisée soit par microfiltration, soit par le procédé de chauffage rapide à haute température dit "flash pasteurisation" ou encore par ultra-violets;
- l'eau stérile, et donc "morte", ainsi obtenue est alors régénérée par addition du condensat d'eau thermale décrit précédemment.

Ce procédé permet donc :

- d'extraire sous forme d'un concentré parfaitement stockable à l'abri de l'air ou sous atmosphère inerte la plus grande partie des bactéries constitutives du plancton thermal et ceci 24 heures par jour et 365 jours par an;
- d'extraire la plus grande partie des gaz originellement dissous dans l'eau thermale et de les stocker.

A partir de là, de concevoir une régénération des bains collectifs en eau thermale en utilisant par recyclage des volumes de régénération significatifs, compatibles avec la législation sanitaire tout en conservant intégralement les propriétés actives de l'eau en ce qui concerne particulièrement le plancton et les gaz, soit à concentration égale à celle de l'eau primitive soit supérieure si on le souhaite.

A titre d'exemple :

Si la législation, actuellement à l'étude, demande un renouvellement horaire maximal de la totalité de la contenance d'une piscine collective soit 100m3 par heure, peu de stations thermales en France pourront satisfaire cette règle du moins dans l'esprit de conservation intégrale des propriétés actives d'un eau thermale.

Par le procédé revendiqué une station thermale qui disposerait d'un débit total horaire de 40m3 d'eau thermale dont compte tenu des autres soins pratiqués d'un débit de 20m3 par heure pour l'alimentation de ou des piscines collectives pourrait donc stocker sous forme de concentré l'équivalent annuel de 20m3/h x 24 x 365 = 175.200m3, plus 20m3/h x 16 x 36 = 116.800m3 correspondant à l'eau non utilisée dans les autres soins en dehors des 8 heures d'ouverture (24-8 = 16) soit au total 292.000m3 dans un volume minimum de concentré de 35.5m3 (2m3 d'eau thermale pour 1/4 de litre de concentré).

Si le renouvellement admis des piscines collectives est 100m3 à l'heure, la station possède 2.920 heures d'utilisation de piscine qu'elle peut répartir au mieux en fonction de la fréquentation de la station.

Si la haute saison de mai à novembre, soit 6 mois, correspond à 70% de la fréquentation globale de l'année, la station aura un potentiel de bains collectifs en haute saison de 2.044 heures soit en moyenne 340 heures par mois. Ceci est à comparer au potentiel d'une station en haute période ayant 20m3 heure d'eau thermale disponible pour les piscines et une capacité de stockage de cette quantité sur 24 heures plus celle de l'eau disponible en dehors des autres soins soit : 20m3/h x 24 = 408

plus 20m3/h x 16 = 320 donc au total 728m3 pour jour.

Pour un même débit de renouvellement des piscines de 100m3 par heure, la station a un potentiel journalier de 7,28 heures fonctionnement soit par mois de 189 heures (7,28 x 26).

Le procédé revendiqué dans ces conditions donne un gain de productivité annuel minimum de 80%.

Il n'oblige qu'à un stockage réduit.

Il permet de recycler une partie de l'eau thermale sur elle-même en leui conservant ses propriétés actives.

Il permet de mieux répartir le potentiel en fonction de la fréquentation de la station thermale.

Il permet avec une obligation de recycler en permanence 100m3/h de faire tourner en période de pointe 2 piscines collectives de capacité de 100m3 chacune pendant 8 heures par jour pour un débit de source de 20m3/h.

Il permet si le bilan global en concentré obtenu le permet de faire des bains suractivés en plancton thermal.

Il permet de faire une maturation séparée du concentré thermal et de réinjecter ce dernier dans le cycle de régénération.

En ce qui concerne les boues thermales, on procède de la façon suivante :

La boue qui sorte des piscines ou bains individuels est tamisée par des tamis vibrants par exemple afin de retenir les grosses impuretés. Elle est ensuite stérilisée par voie physique : un procédé chaleur comme le "flash pasteurisation" ou celui éventuel d'un bombardement électronique.

Elle est ensuite reconditionnée :

Tout d'abord en éléments chimiques actifs provenant des anions et des cations constitutifs des sels dissous de l'eau thermale et principalement ceux provenant des oligo-éléments. Pour cela une partie significative de l'eau thermale interstitielle usée sera éliminée au cours du cycle (1 à 2 minimum) et remplacée par un apport équivalent en eau thermale neuve porteuse des éléments actifs. L'élimination de l'eau interstitielle se fera pour partie par la voie chaleur si ce mode de stérilisation est choisi, par centrifugation ou les deux combinés, par simple décantation dans les bacs de stockage des boues usées. Toutes ces méthodes sont complétées par le remplacement permanent des boues perdues pendant les soins.

Puis par l'addition du concentré de plancton thermal, soit dans les mêmes proportions que celles de la boue primitive, soit dans des proportions supérieures pour faire des boues suractivées, soit si on le désire pour un concentré de plancton ayant subi une maturation appropriée.

Son reconditionnement sera complété par l'addition des gaz extraits lors de la phase de fabrication du concentré.

On peut également dans le cadre de la présente invention utiliser le concentré d'eau thermale pour l'additionner à une eau normale afin d'obtenir une eau qui sans être réellement une eau thermale comporte une population de plancton thermal qui en est très proche. On peut en effect ajouter dans une baignoire remplie d'eau normale, une quantité de concentré suffisante pour recréer des conditions voisines de celles d'une eau thermale. Par ce moyen, il sera donc possible d'utiliser les propriétés actives d'un concentré de plancton en dehors d'une station thermale en l'utilisant à domicile par exemple dans une baignoire, Jacuzzi, Spa...

**Revendications**

1. Procédé de régénération d'eaux thermales comportant des éléments actifs, vivants, dénommés plancton thermal consistant à:
    — Obtenir un concentré de plancton thermal vivant par condensation de l'eau thermale pure avant toute utilisation de celle-ci par procé-

dés physiques connus, tels que microfiltration osmose inverse et plus particulièrement centrifugation;
- Filtrer l'eau thermale après utilisation;
- Stériliser l'eau thermale filtrée;
- Régénérer l'eau thermale stérilisée en y ajoutant le concentré obtenu à l'étape initiale, en proportion suffisante pour rétablir dans l'eau thermale la population naturelle en plancton.

2. Procédé selon la revendication 1, caractérisé en ce que les gaz récupérés lors de l'opération de concentration et en particulier de centrifugation, sont réinsufflés par barbotage dans le concentré de plancton thermal pour accélérer la maturation des microorganismes.

3. Procédé selon la revendication 1 ou 2 dans lequel on ajoute une quantité de concentré supérieure à la normale pour obtenir une eau suractivée.

4. Procédé de régénération de boue thermale comportant des éléments actifs vivants dénommés plancton thermal consistant à:
–Stériliser la boue thermale polluée, éliminer une partie de l'eau interstitielle usée de la boue thermale stérilisée;
- Rajouter la même quantité d'eau thermale pure que celle de l'eau préalablement extraite;
- Rajouter le concentré de plancton thermal obtenu selon la première étape des procédés selon les revendications 1 ou 2.

5. Procédé selon la revendication 4 dans lequel on ajoute à la boue thermale régénérée une quantité supérieure de concentré de plancton thermal pour obtenir une boue suractivée.

6. Procédé de régénération d'eaux thermales ou de boue thermale contenant un plancton thermal selon l'une quelconque des revendications 1 à 5, caractérisé en ce que l'on stocke en période de fermeture, d'activité réduite de la station thermale ou tout simplement 24H heures sur 24, 365 jours par an, du concentré d'eau thermale pure, obtenu à partir de l'eau non utilisée pour les soins, en quantité suffisante pour régénérer les eaux et ou boues polluées lors de périodes de pleine activité.

7. Extrait d'eau thermale, caractérisé en ce qu'il est formé par le concentré réalisé à la première étape des procédés selon les revendications 1 ou 2.

8. Utilisation d'un extrait selon la revendication 7, caractérisée en ce que l'on ajoute ledit extrait à une eau ou boue thermale pure pour obtenir une eau ou boue thermale suractivée.

9. Utilisation d'un extrait selon la revendication 7, caractérisée en ce que l'on ajoute un tel extrait à un bain d'eau normale pour obtenir un bain ayant une teneur en plancton thermal proche de celle d'une eau thermale.

**Patentansprüche**

1. Verfahren zur Regenerierung von Thermalwässern, die aktive, lebende Elemente, genannt Thermalplankton, enthalten, bestehend aus folgenden Schritten:
- Herstellen eines Konzentrats aus lebendem Thermalplankton durch Kondensieren des reinen Thermalwassers vor dem Einsatz desselben durch bekannte physikalische Verfahren, wie Mikrofiltrieren, Umkehrosmose und insbesondere Zentrifugieren;
- Filtrieren des Thermalwassers nach dem Gebrauch;
- Sterilisieren des filtrierten Thermalwassers;
- Regenerieren des sterilisierten Thermalwassers durch Beifügen des in der ersten Phase erhaltenen Konzentrats in hinreichendem Verhältnis, um im Thermalwasser die natürliche Population an Plankton wiederherzustellen.

2. Verfahren gemäß Anspruch 1, dadurch gekennzeichnet, daß die beim Konzentrieren und insbesondere bei Zentrifugieren aufgefangenen Gase wieder in das Thermalplanktonkonzentrat eingeblasen werden, um die Reifung der Mikroorganismen zu beschleunigen.

3. Verfahren gemäß Anspruch 1 oder 2, in dem man eine größere als die normale Menge des obigen Konzentrats beifügt, um ein überaktiviertes Wasser zu erhalten.

4. Verfahren zur Regenerierung von Thermalschlämmen, die lebende aktive Elemente, genannt Thermalplankton, enthalten, bestehend aus:
- Sterilisieren des verschmutzten Thermalschlamms, Ausscheiden eines Teils des gebrauchten Porenwassers des sterilisierten Schlamms;
- Wiederbeifügen der gleichen Menge reinen Thermalwassers wie die vorher ausgeschiedene Wassermenge;
- Wiederbeifügen des Thermalplanktonkonzentrats, das im ersten Verfahrensschritt gemäß den Ansprüchen 1 oder 2 erhalten wurde.

5. Verfahren gemäß Anspruch 4, in dem man dem regenerierten Thermalschlamm eine größere Menge Thermalplanktonkonzentrat beifügt, um einen überaktivierten Schlamm zu erhalten.

6. Verfahren zum Regenerieren von ein Thermalplankton enthaltenden Thermalwässern bzw. Thermalschlamm gemäß einem beliebigen der Ansprüche 1 bis 5, dadurch gekennzeichnet, daß man in Zeiten, in denen das Thermalbad geschlossen ist bzw. nur mit verminderter Leistung arbeitet, oder einfach 24 Stunden von 24 Stunden während 365 Tagen im Jahr reines Thermalwasserkonzentrat, das aus dem nicht für die Kuren verbrauchten Wasser gewonnen wird, in hinreichender Menge aufbewahrt, um das Wasser bzw. den Schlamm regenerieren zu können, der in Perioden des vollen Betriebs der Thermalbads verschmutzt wird.

7. Thermalwasserextrakt, dadurch gekennzeichnet, daß er aus dem im ersten Schritt der Verfahren gemäß den Ansprüchen 1 oder 2 gewonnenen Konzentrat gebildet wird.

8. Einsatz eines Extrakts gemäß Anspruch 7, dadurch gekennzeichnet, daß man diesen Extrakt einem reinen Thermalwasser bzw. Thermalschlamm zusetzt, um ein überaktiviertes Thermalwasser bzw. einen überaktivierten Thermalschlamm zu erhalten.

9. Vewendung eines Extrakts gemäß Anspruch 7, dadurch gekennzeichnet, daß man einen solchen Extrakt einem normalen Badewasser zusetzt, um ein Bad mit einem Gehalt an Thermalplankton zu erhalten, das sich dem eines Thermalbads annähert.

## Claims

1. A method for regenerating thermal waters containing live active elements known as thermal plankton, which consists in:
   - obtaining a concentrate of live thermal plankton by condensing pure thermal water prior to any utilization thereof, by means of known physical processes such as microfiltration, reverse osmosis, and more particularly centrifugation;
   - filtering the thermal water after it has been used;
   - sterilizing the filtered thermal water;
   - regenerating the sterilized thermal water by adding thereto the concentrate obtained through the initial stage, in sufficient proportion for restoring in the thermal water the original natural plankton population.

2. A method according to Claim 1, wherein the gases recovered during the concentration process, and more particularly during centrifugation, are reintroduced by bubbling into the thermal plankton concentrate for accelerating the maturation of the micro-organisms.

3. A method according to Claim 1 or 2, wherein there is added an above-normal amount of concentrate for obtaining a superactivated water.

4. A method for regenerating thermal mud containing live active elements known as thermal plankton, which consists in:
   - sterilizing the polluted thermal mud and eliminating a fraction of the used interstitial water from the sterilized thermal mud;
   - adding pure thermal water in an amount equal to the amount of previously extracted water;
   - adding the thermal plankton concentrate obtained in accordance with the first step of the methods of Claims 1 or 2.

5. A method according to Claim 4, wherein there is added to the regenerated thermal mud an above-normal amount of thermal plankton concentrate for obtaining a superactivated mud.

6. A method for regenerating thermal waters or thermal muds containing thermal plankton according to any of Claims 1 to 5, characterized by the step of storing, during periods of closure or reduced activity of a spa, or else during 24 hours per day and during 365 days per year, a concentrate of pure thermal water obtained from the water which has not been used for treatments, in sufficient amount for regenerating polluted waters or muds during periods of full activity.

7. An extract of thermal water, characterized in that it is formed of the concentrate produced in the first step of the methods according to Claims 1 or 2.

8. Utilization of an extract according to Claim 7, characterized in that said extract is added to pure thermal water or thermal mud for obtaining a superactivated thermal water or thermal mud.

9. Utilization of an extract according to Claim 7, wherein said extract is added to a bath of ordinary water for obtaining a bath having a thermal plankton content which is close to that of a thermal water.